# EUROPÄISCHE PATENTANMELDUNG

(11) **EP 0 903 734 A2**
(43) Veröffentlichungstag der Anmeldung: **24.03.1999**
(21) Anmeldenummer: 98117986.4
(22) Anmeldetag: 23.09.1998
(51) Int. Cl.: G11B 7/26

(54) **Vorrichtung zum Anfasen der Umfangskante einer CD**

(30) Priorität: 23.09.1997 DE 19741833
(71) Anmelder: Gläss, Reiner, 89551 Königsbronn-Itzelberg (DE)
(72) Erfinder: Gläss, Reiner, 89551 Königsbronn-Itzelberg (DE)
(74) Vertreter: Dr. Weitzel & Partner

(57) **Zusammenfassung**

Die Erfindung betrifft eine Vorrichtung zum Anfasen der Umfangskante einer CD;
mit einem Drehteller zum Auflegen und Festspannen der CD;
mit einem Motor zum Antreiben des Drehtellers;
mit einem gegen die Umfangskante des Drehtellers andrückbaren Werkzeug;
zwischen Motor und Drehteller ist ein Riementrieb vorgesehen.

## Beschreibung

Die Erfindung betrifft eine Vorrichtung zum Anfasen der Umfangskante einer CD.

Es ist bekannt, daß CDs dann besser klingen, wenn der Rand angefast ist. Der Musikgenuß gewinnt bezüglich der Homogenität, des Grundtons und der Räumlichkeit. Außer dem Anfasen kann es zweckmäßig sein, den Rand zu schwärzen oder mit anderen Farben zu versehen, die unterschiedliche Absorptionseigenschaften haben.

Die praktische Durchführung des Anfasens machte bisher Schwierigkeiten. Vor allem kommt es darauf an, daß die Anfasung rundum gleichmäßig vorgenommen wird. Weiterhin hatte der Erfinder vor Entstehen der Erfindung zahlreiche Geräte selbst geschaffen Bei diesen Geräten war der Drehteller in naheliegender Weise unmittelbar auf der Motorwelle montiert. Die Ergebnisse waren unbefriedigend.

Der Erfindung liegt die Aufgabe zugrunde, eine Vorrichtung zu schaffen, mit der die Umfangskante einer CD schnell und einfach angefast werden kann, bei optimalem Klangergebnis. Der Erfindung liegt ferner die Aufgabe zugrunde, ein Verfahren zum Herstellen einer solchen Vorrichtung anzugeben.

Diese Aufgaben werden durch die Merkmale der unabhängigen Ansprüche 1 und 6 gelöst.

Der Erfinder hat folgendes erkannt: Wird der Drehteller, der die CD aufnimmt unmittelbar auf der Motorwelle gelagert, so werden hierbei die Schwingungen der Motorwelle auf den Drehteller übertragen, und zwar sowohl die Drehschwingungen als auch die Auslenkungen der Welle in radialer Richtung. Dies führt zu einem unbefriedigenden Klangergebnis beim Abspielen der CD. Die erfindungsgemäße Lösung besteht darin, das Drehmoment vom Motor nicht unmittelbar auf den Drehteller zu übertragen, sondern unter Zwischenschaltung eines Antriebsriemens. Eine solche Anordnung führt zu einer verblüffenden Verbesserung des Klangergebnisses. Dabei wird im Rahmen dieser Darlegung unter "Antriebsriemen" jede Art von endlosem Gurt verstanden, beispielsweise in Gestalt eines Gummistrangs, einer Kordel oder eines Kunststoffstranges.

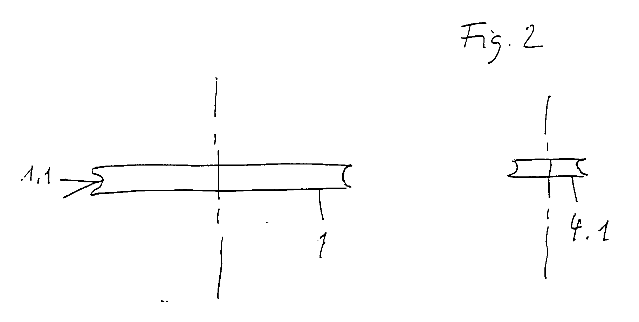

Die Erfindung ist anhand der Zeichnung näher erläutert. Darin ist im einzelnen folgendes dargestellt:

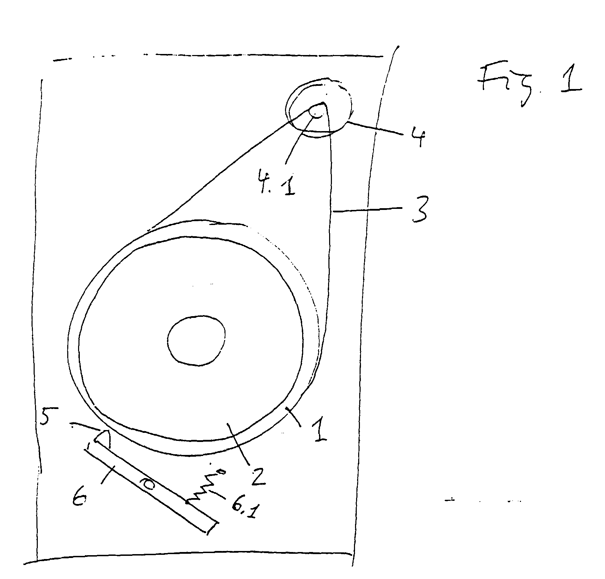

Figur 1 zeigt eine Vorrichtung gemäß der Erfindung in Draufsicht. Man erkennt dort einen Drehteller (1) zum Auflegen und Festspannen einer CD (2). Der Drehteller ist mittels eines Gurtes (3) angetrieben, in diesem Falle ein Riemen aus Kunststoff. Zum Antrieb dient ein Motor (4) mit Riemenscheibe (4.1).
   Ein Werkzeug (5), das die Anfasung der CD (2) bewirkt, ist an einem Schwenkhebel (6) gelagert. Der Schwenkhebel ist entgegen der Kraft einer Zugfeder (6.1) derart verschwenkbar, daß das Werkzeug (5) beim Verschwenken gegen die Umfangskante der CD angedrückt wird.
Aus Figur 2 ersieht man, daß Drehteller (1) und Riemenscheibe (4.1) koaxial angeordnet sind. Der Drehteller (1) weist eine Umfangsnut (1.1) zur Aufnahme des Antriebsriemens (3) auf.

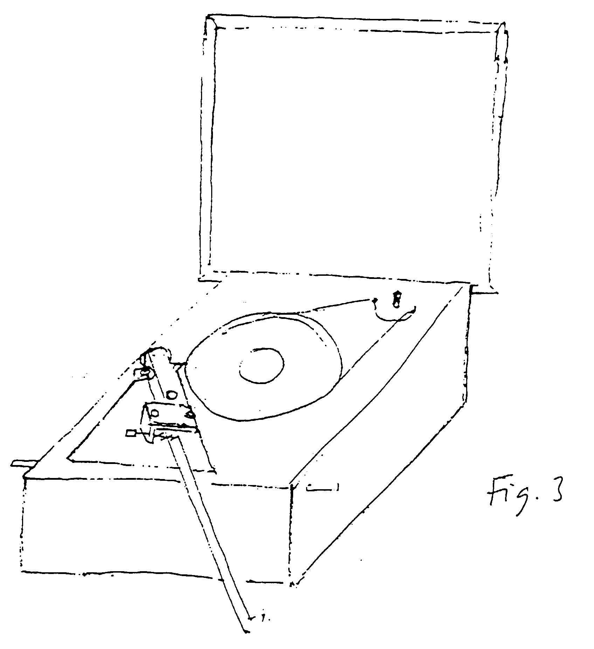

Figur 3 ist eine perspektivische Darstellung der gesamten Vorrichtung.

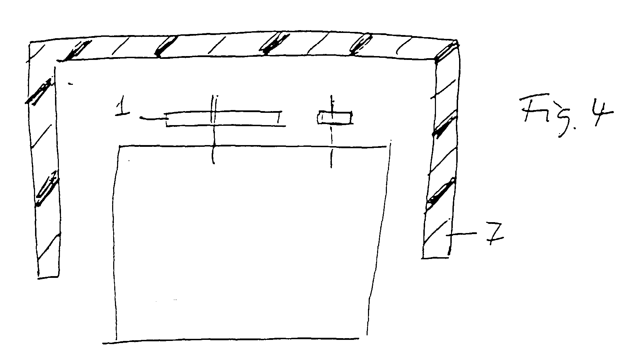

Figur 4 zeigt in schematischer Darstellung die Vorrichtung mit einem deckelartigen Spänefang (7) aus Acrylglas.

## Patentansprüche

1. Vorrichtung zum Anfasen der Umfangskante einer CD;
1.1 mit einem Drehteller zum Auflegen und Festspannen der CD;
1.2 mit einem Motor zum Antreiben des Drehtellers;
1.3 mit einem gegen die Umfangskante des Drehtellers andrückbaren Werkzeug;
1.4 zwischen Motor und Drehteller ist ein Riementrieb vorgesehen.

2. Vorrichtung nach Anspruch 1, gekennzeichnet durch die folgenden Merkmale:
2.1 Motor und Drehteller sind achsparallel zueinander angeordnet;
2.2 die Motorwelle trägt eine Riemenscheibe;
2.3 der Drehteller weist eine Umfangsrille zur Aufnahme des Riemens auf.

3. Vorrichtung nach Anspruch 1 oder 2, gekennzeichnet durch die folgenden Merkmale:
3.1 das Werkzeug ist an einem Schwenkhebel angeordnet;
3.2 der Schwenkhebel ist entgegen der Kraft einer Feder gegen die Umfangskante der CD andrückbar.

4. Vorrichtung nach einem der Ansprüche 1 bis 3, dadurch gekennzeichnet, daß das Werkzeug zwecks Veränderns des Fasenwinkels um seine eigene Achse verdrehbar, und in einer bestimmten Verdrehposition arretierbar.

5. Vorrichtung nach einem der Ansprüche 1 bis 4, dadurch gekennzeichnet, daß außer dem Werkzeug ein Pinsel vorgesehen ist, der gegen die Umfangskante des Drehtellers anlegbar ist, und der dem Aufbringen einer Farbe oder eines Lackes dient.

6. Verfahren zum Herstellen einer Vorrichtung gemäß einem der Ansprüche 1 bis 5, gekennzeichnet durch die folgenden Merkmale:
6.1 es wird eine Schleifscheibe in eine solche Position gebracht, daß sich ihre Schleiffläche parallel zur Ebene der Riemenscheibe befindet;
6.2 die Schleifscheibe wird unter Parallelverschiebung gegen den Drehteller angedrückt.
